# EUROPÄISCHE PATENTSCHRIFT

(11) **EP 0 410 143 B1**
(45) Veröffentlichungstag und Bekanntmachung des Hinweises auf die Patenterteilung: **26.01.1994**
(21) Anmeldenummer: 90111933.9
(22) Anmeldetag: 23.06.1990
(51) Int. Cl.: G02B 6/42, H04B 10/00

(54) **Optelektrische Sende- und Empfangsvorrichtung**
Optoelectric sending and receiving device
Dispositif d'émission et de réception optoélectrique

(30) Priorität: 28.07.1989 DE 3925128
(43) Veröffentlichungstag der Anmeldung: 30.01.1991
(73) Patentinhaber: Richard Hirschmann GmbH & Co., 73726 Esslingen (DE)
(72) Erfinder: Blümcke, Thomas, D-7741 Vöhrenbach (DE); Röckle, Jürgen, D-7312 Kirchheim (DE)
(74) Vertreter: Geyer, Ulrich F., Dr. Dipl.-Phys.

(56) Entgegenhaltungen:
- EP-A- 0 238 977
- WO-A-88/09944
- GB-A- 2 164 763
- US-A- 4 381 137
- US-A- 4 423 922
- PATENT ABSTRACTS OF JAPAN, Band 2, Nr. 139, 17. November 1978, Seite 8646 E 78; & JP-A-53 106 503
- IBM TECHNICAL DISCLOSURE BULLETIN, Band 20, Nr. 11B, April 1978, Seiten 4763-4764, New York, US; R. BETTS: "Fiber-optic transmit/receive coupler"

## Beschreibung

Die Erfindung betrifft eine optoelektrische bidirektionale Sende- und Empfangsvorrichtung für eine Lichtwellenleiter-Verbindungsstrecke mit einem Sender, einem Empfänger und einem Verzweiger zur Trennung der auf Lichtwellenleiter-Verbindungsstrecke bidirektional übertragenen Lichtsignale.

Aus der DE-A1-37 16 772 ist eine optoelektrische Sende- und Empfangsvorrichtung der eingangs genannten Art bekannt. Ein elektro-optischer Sender, etwa eine lichtemittierende Diode, und ein optoelektronischer Empfänger, etwa eine Photodiode, sind koaxial übereinander angeordneet. Zwischen dieser Sender- und Empfängeranordnung und einer Lichtwellenleiter-Verbindungsstrecke sind koaxial angeordnete Lichtwellenleiter vorgesehen, wobei ein hohlzylindrischer Lichtwellenleiter mit dem Empfänger und ein zylindrischer Lichtwellenleiter mit dem Sender optisch gekoppelt sind. Für eine solche Vorrichtung sind spezielle, nicht handelsübliche Sende- und Empfangshalbleiter sowie dafür angepaßte, spezielle Lichtwellenleiter erforderlich, die die Vorrichtung erheblich verteuern. Darüber hinaus weist diese bekannte Sende- und Empfangsvorrichtung den Nachteil auf, daß hohe Werte der Rückflußdämpfung α R zwischen dem Sender und dem Empfänger bei angeschlossener Verbindungsstrecke nicht erzielt werden können, da zwischen den der Abschlußfläche der Lichtwellenleiter-Verbindungsstrecke zugewandten Stirnflächen der koaxial angeordneten Lichtwellenleiter für den Sender und den Empfänger einerseits und der Abschlußfläche der Lichtwellenleiter-Verbindungsstrecke andererseits ein Zwischenraum bestehen muß. Je nach den geometrieabhängigen Vorraussetzungen sind Rückflußdämpfungs-Werte höher als 20 bis 25 dB nicht zu erreichen. Für die Anwendung von optoelektronischen Sende- und Empfangsvorrichtungen in Übertragungssystemen sind jedoch Rückflußdämpfungs-Werte erforderlich, die größer als 35 dB sein sollten.

Weiterhin sind Taperkoppler-Ausführungen mit Faseranschlüssen bekannt. Bei der Montage von Steckern an diese Anschlüsse treten an den Glas-Luft-Übergängen im Stecker Reflexionen auf, die über einen Verzweiger auf den Empfänger gelangen. Derartige bekannte Ausführungsformen sind daher für die meisten Anwendungsfälle ebenfalls nicht geeignet.

Eine weitere Möglichkeit besteht in der Verwendung von Verzweigern, die wellenlängenselektiv arbeiten und mit Anschlüssen für Lichtwellenleiter-Stecker versehen sind. Bei diesen Vorrichtungen sind einheitliche Endgeräte nicht möglich. es sind dabei zwei Sendedioden mit unterschiedlichen Wellenlängen erforderlich, die eine derartige Lösung sehr aufwendig machen und die Anwendung verteuern.

Aus "Patent Abstracts of Japan", Band 2, 17. November 1978, Seite 8646E, Nr. 139 ist eine bidirektionale Übertragungseinrichtung mit einem reflektierenden Spiegel bekannt, der eine Öffnung aufweist.

Die US-A-4 381 137 offenbart eine optische Einrichtung, die ein Lichtbündel aus einer Sendevorrichtung in zwei Lichtbündel unterschiedlicher Wellenlänge aufteilt und in zwei örtlich getrennte Empfangsvorrichtungen einspeist.

Der Erfindung liegt daher die Aufgabe zugrunde, eine optoelektrische Sende- und Empfangsvorrichtung für eine Lichtwellenleiter-Verbindungsstrecke mit einem Sender und einem Empfänger zu schaffen, die neben einer einfachen Bauweise eine nahezu beliebig große Rückflußdämpfung bei angeschlossener Lichtwellenleiter-Verbindungsstrecke ermöglicht.

Die gestellte Aufgabe wird erfindungsgemäß durch die kennzeichnenden Merkmale des Anspruchs 1 gelöst.

Gemäß der Erfindung weist der Verzweiger jeweils einen dem Sender und dem Empfänger zugeordneten Raumwinkelbereich jeweils für das zu sendenden und für das empfangene Lichtbündel auf. Die Modenselektion zwischen zu sendendem und empfangenem Lichtbündel erfolgt vorzugsweise über unterschiedliche Raumwinkelbereiche.

Vorzugsweise sind die Sender- und Empfänger-Raumwinkelbereiche zueinander rotationssymmetrisch, obgleich auch andere Symmetrien grundsätzlich denkbar sind.

Zur Bildung der beiden Raumwinkelbereiche für das Sende und Empfangen der Lichtbündel sind optische Bauelemente vorgesehen, die insbesondere Blenden und/oder Linsen sein können.

Wenigstens eines der optischen Bauelemente weist eine reflektierende Fläche auf. An ihr wird dann wenigstens eines der Strahlenbündel reflektiert. Das optische Bauelement ist vorzugsweise ein optisches Prisma zur Bildung der Sender-Empfänger-Raumwinkelbereiche. Das optische Prisma weist dabei eine reflektierende Fläche mit einem nicht reflektierenden Bereich auf. Vorzugsweise ist die reflektierende Fläche eine Fläche mit Totalreflexion für wenigstens ein auftreffendes Lichtbündel.

Vorteilhaft ist es, wenn ein optisches Prisma vorgesehen ist, dessen eine Kathetenfläche einem Sender, dessen andere Kathetenfläche einer Abschlußfläche der Lichtwellenleiter-Verbindungsstrecke. und dessen Hypothenusenfläche dem Empfänger zugewandt ist. Die Hypothenusenfläche weist die reflektierende Fläche mit einem nicht-reflektierenden Bereich auf. An der reflektierenden Fläche wird mit Ausnahme des nicht reflektierenden Bereichs eines der beiden Lichtbündel auf die Abschlußfäche der Lichtwellenleiter-Verbindungsstrecke reflektiert.

Die Hypothenusenfläche weist vorzugsweise eine reflektierende Schicht mit einer Öffnung für das empfangene Lichtbündel auf. Alternativ kann der nicht reflektierende Bereich durch ein die Totalreflexion der reflektierenden Fläche aufhebendes optisches Element gebildet sein.

Besonders vorteilhaft ist es, wenn das optische Prisma ein gleichschenkliges Prisma ist, obgleich in besonderen Anwendungsfällen auch ein ungleichschenkliges optisches Prisma verwendet werden kann. Das gleichschenklige optische Prisma hat jedoch den Vorteil, daß die damit erzielten Raumwinkelbereiche für die Trennung der bidirektional übertragenen Lichtbündel einfach und überschaubbar erzeugt werden können.

Es ist es vorteilhaft, wenn zwischen der dem Sender zugewandten Kathetenfläche des optischen Prismas und dem Sender eine Linse vorgesehen ist, die das vom Sender kommende Lichtbündel in ein im wesentlichen paralleles Lichtbündel umsetzt.

Der nicht reflektierende Bereich bzw. die Öffnung der reflektierten Schicht ist vorteilhaft koaxial zum im wesentlichen parallelen, vom Sender gesendeten Lichtbündel angeordnet. Auf diese Weise ergibt sich eine gute Symmetrie der Lichtbündel und ein geringer Lichtverlust im Verzweiger.

Weiterhin ist es vorteilhaft, wenn zwischen der der Abschlußfläche der Lichtwellenleiter-Verbindungsstrecke zugewandten Kathetenfläche des optischen Prismas und der Abschlußfläche der Lichtwellenleiter-Verbindungsstrecke eine Linse vorgesehen ist, die das reflektierte, vom Sender ausgesandte, im wesentlichen parallele Lichtbündel auf die Abschlußfläche der Lichtwellenleiter-Verbindungsstrecke fokussiert und das von der Abschlußfläche der Lichtwellenleiter-Verbindungsstrecke ausgehende empfangene Lichtbündel in ein im wesentlichen paralleles Lichtbündel umsetzt. Die Lichtausbeute einer derartigen Anordnung ist besonders hoch.

Mit Vorteil ist wenigstens eine dieser Linsen eine Kugellinse.

Eine weitere Ausführungsform der Erfindung besteht vorteilhafterweise insbesondere darin, daß zwischen dem nicht reflektierenden Bereich bzw. der Öffnung der reflektierenden Schicht und dem Empfänger ein Lichtwellenleiter vorgesehen ist. Vorzugsweise weist dabei der Lichtwellenleiter im wesentlichen denselben Berechnungsindex wie das Prisma auf.

In der Praxis ist es vorteilhaft, die optoelektrische Sende- und Empfangsvorrichtung in einem gemeinsamen Gehäuse mit Stekkerfassung für den Anschluß der Lichtwellenleiter-Verbindungsstrecke unterzubringen. Auf diese Weise ergibt sich eine kompakte, robuste und von den Umgebungslichtverhältnissen unabhängige Vorrichtung.

Die Erfindung wird nachstehend anhand der Zeichnungen beispielsweise näher erläutert. Es zeigen:
- Fig. 1: eine schematische Darstellung der Raumwinkelbereiche zur Erläuterung des Erfindungsprinzips,
- Fig. 2: eine schematische Darstellung einer Ausführungsform der erfindungsgemäßen Vorrichtung und
- Fig. 3: die in einem gemeinsamen Gehäuse untergebrachte Sende- und Empfangsvorrichtung für den praktischen Einsatz.

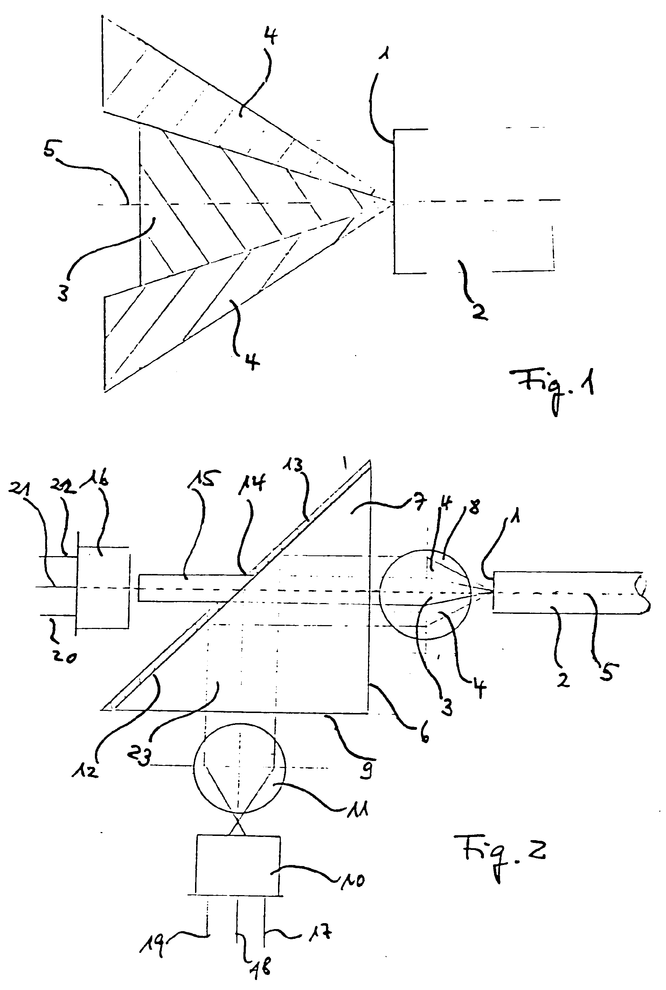

Wie in Fig. 1 schematisch dargestellt ist, wird der gesamte der numerischen Apertur einer Lichtwellenleiter-Verbindungsstrecke 2 entsprechende Raumwinkelbereich für die Lichtbündel, die von einer Abschluß- oder Stirnfläche 1 der Verbindungsstrecke 2 abgestrahlt werden bzw. auf die Abschlußfläche 1 der Lichtwellenleiter-Verbindungsstrecke 2 zur Weiterleitung in ihr auftreffen, in zwei Raumwinkelbereiche 3, 4 aufgeteilt, die zur Achse 5 der Lichtwellenleiter-Verbindungsstrecke 2 rotationssymmetrisch sind. Die Trennung der Raumwinkelbereiche 3 bzw.4 erfolgt durch optische Bauelemente, wie Linsen und/oder Blenden, was im weiteren noch im einzelnen erläutert werden soll. Über einen der Raumwinkelbereiche 3 bzw. 4 wird ein von einem Sender kommendes Lichtbündel in die Lichtwellenleiter-Verbindungsstrecke 2 eingekoppelt, und über den anderen Raumwinkelbereich 4 bzw. 3 wird ein Lichtbündel von der Lichtwellenleiter-Verbindungsstrecke 2 auf den Empfänger ausgekoppelt.

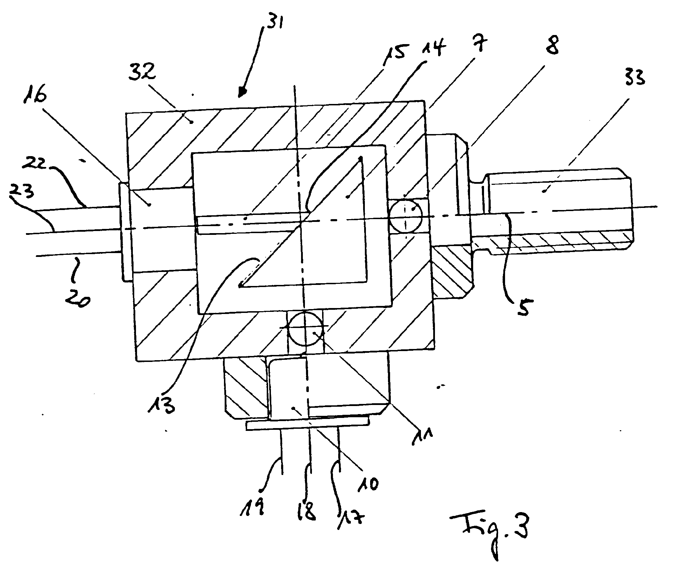

Fig. 2 zeigt eine detailliertere Darstellung des in Fig. 1 schematisch wiedergegebenen Erfindungsprinzips unter Verwendung schematisch dargestellter optischer Bauelemente.

Zwischen der Abschlußfläche 1 der Lichtwellenleiter-Verbindungsstrecke 2 und einer Kathetenfläche 6 eines optischen Prismas 7 befindet sich eine erste Kugellinse 8 und zwischen der anderen Kathetenfläche 9 des Prismas 7 und einem Sender 10 befindet sich eine zweite Kugellinse 11. Auf der den beiden Kugellinsen 8, 11 abgewandten Hypothenusenfläche 12 des optischen Prismas 7 ist eine reflektierende Schicht 13 aufgebracht. Die reflektierende Schicht 13 weist eine Öffnung 14 auf, die zur Achse 5 der Lichtwellenleiter-Verbindungsstrecke 2 koaxial gewählt ist. An diese Blendenöffnung 14 schließt sich ein Lichtwellenleiter 15 mit im wesentlichen demselben Berechnungsindex wie das Prisma an. Der Lichtwellenleiter 15 ist zur Achse 5 der Lichtwellenleiter-Verbindungsstrecke 2 ebenfalls vorzugsweise koaxial angeordnet. Im Bereich der Blendenöffnung ist die Totalreflexion aufgrund des angebrachten Lichtwellenleiters aufgehoben, so daß das in diesem Bereich auftreffende Licht nicht reflektiert wird.

Der Sender 10, der beispielsweise eine lichtemittierende Diode sein kann, besitzt elektrische Anschlüsse 17, 18, 19, und der Empfänger 16, der als Detektor dient, und beispielsweise eine Photodiode ist, weist elektrische Anschlüsse 20, 21, 22 auf. Über die Anschlüsse 17, 18, 19 des Senders 10 werden diesem in Lichtsignale umzusetzende elektrischen Signale zugeführt. Die Anschlüsse 20, 21, 22 des Empfängers 16 leiten die elektrischen Signale weiter, die vom Empfänger 16 aus den auf ihn auftreffenden Lichtsignale erzeugt werden.

Das vom Sender 10 erzeugte Lichtbündel wird in der zweiten Kugellinse 11 zu einem parallelen Lichtbündel 23 aufgeweitet, das an der reflektierenden Schicht 13 des Prismas 7 in dem dem Raumwinkel 4 entsprechenden Bereich auf die erste Kugellinse 8 reflektiert und von dieser im Raumwinkelbereich 4 auf die Abschlußfläche 1 der Lichtwellenleiter-Verbindungsstrecke 2 fokussiert und in dieser weitergeleitet wird. Da im Bereich der Öffnung 14 keine Reflexion des vom Sender 10 bzw. von der ersten Kugellinse 8 kommenden parallelen Lichtbündels erfolgt, tritt im Raumwinkelbereich 3 kein vom Sender 10 kommendes Licht auf.

Das von der Abschlußfläche 1 der eine bidirektionale Leitung darstellenden Lichtwellenleiter-Verbindungsstrecke 2 abgestrahlte Licht wird von der ersten Kugellinse 8 parallel gerichtet und trifft auf die reflektierende Schicht 13 und die Blendenöffnung 14 auf. Das empfangene Licht wird dabei nur im Bereich der Öffnung 14 über den Lichtwellenleiter 15 an den Empfänger 16 weitergeleitet.

Da im inneren Raumwinkelbereich 3 - wie bereits erläutert - kein vom Sender 10 kommendes Licht auftritt, ist die Rückflußdämpfung α R der erfindungsgemäßen Vorrichtung besonders groß. Prinzipiell ergibt sich dadurch eine beliebig hohe Rückflußdämpfung der erfindungsgemäßen Vorrichtung.

Fig. 3 zeigt eine Ausführungsform des in Fig. 2 schematisch dargestellten Ausführungsbeispiels, wie es als Bauteil in der Praxis eingesetzt werden kann. Die in Fig. 3 dargestellten Bauelemente, die denen von Fig. 2 entsprechen, sind mit denselben Bezugszeichen versehen und werden der Übersichtlichkeit halber nicht nochmals erläutert.

Das optische Prisma 7 mit der reflektierenden Schicht 13 sowie der Lichtwellenleiter 15 sind in einem Gehäuse 31 untergebracht. In der Gehäusewandung 32 sind die erste und zweite Kugellinse 8 und 11 sowie der Empfänger 16 angeordnet. Auf der der anderen Kathetenfläche 9 entsprechenden Außenfläche des Gehäuses 31 ist der Sender 10 angeflanscht. Eine Steckerfassung 33 zum Anschluß der in Fig. 3 nicht dargestellten Lichtwellenleiter-Verbindungsstrecke 2 ist an der dem Empfänger 16 gegenüberliegenden Außenfläche des Gehäuses 31 angebracht. Mit der in Fig. 3 dargestellten Ausführungsform ergibt sich eine kompakte, robuste und die einzelnen Bauteile schützende Sende- und Empfangsvorrichtung gemäß der vorliegenden Erfindung für den praktischen Einsatz.

Die Erfindung wurde anhand bevorzugter Ausführungsbeispiele erläutert. Dem Fachmann sind jedoch vielfältige Abwandlungen und Ausgestaltungen dieser Ausführungsbeispiele möglich, ohne daß dadurch der Erfindungsgedanke verlassen wird. Beispielsweise ist es möglich, die Anordnung des Senders 10 und des Empfängers 16 auszutauschen. Eine weitere Möglichkeit besteht darin, mit diesem Austausch auch den Lichtwellenleiter 15 und die zweite Kugellinse 11 in entsprechender Weise in ihrer Lage auszuwechseln.

## Patentansprüche

1. Optoelektrische bidirektionale Sende- und Empfangsvorrichtung für eine Lichtwellenleiter-Verbindungsstrecke (2), mit einem Sender (10), einem Empfänger (16) und einem Verzweiger (7) zur Trennung der auf der Lichtwellenleiter-Verbindungsstrecke bidirektional übertragenen Lichtsignale, dadurch gekennzeichnet, daß
- ein optisches Prisma (7) als Verzweiger zwischen der Lichtwellenleiterverbindungsstrecke (2) und dem Sender bzw. Empfänger vorgesehen ist,
- auf einer Seitenfläche des Prismas (7) ein erster und ein zweiter Bereich vorgesehen sind, wobei einer der Bereiche reflektierend und der jeweils andere Bereich lichtdurchlässig ausgeführt ist und der erste Bereich (14) von dem zweiten Bereich (12) umgeben ist,
- die Endfläche der Lichtwellenleiterverbindungsstrecke (2) der einen Seitenfläche (12) des Prismas (7) und dem ersten Bereich gegenüberliegt;
- der Sender (10) und der Empfänger (16) jeweils einer anderen Seitenfläche des Prismas (7) gegenüberliegen und
- der Empfänger (16) im Strahlengang des durchgelassenen bzw. reflektierten Signallichts liegt,
so daß das Licht aus der Lichtwellenleiter-Verbindungsstrecke (2) durch das Prisma (7) auf die eine Seitenfläche und den ersten Bereich trifft, der Teile des Signallichtbündels aus der Lichtwellenleiterverbindungsstrecke zum Empfänger (16) reflektiert bzw. durchläßt, so daß nur der zentrale Teil des Signallichtbündels auf den Empfänger trifft und
das vom Sender emittierte Lichtbündel durch das Prisma (7) hindurchtritt und über die eine Seite des Prismas (7) in die Abschlußfläche der Lichtwellenleiterverbindungsstrecke (2) eingekoppelt wird, wobei der zentrale Teil des Senderlichtbündels durch die Blendenwirkung des umgebenden Bereichs ausgeblendet wird und so eine räumlich selektive Einkopplung erreicht wird.

2. Optoelektrische Sende- und Empfangsvorrichtung nach Anspruch 1, dadurch gekennzeichnet, daß der nicht reflektierende Bereich (Öffnung 14) so angeordnet ist, daß über einen Raumwinkelbereich (4) ein von einem Sender kommendes Lichtbündel in die Lichtwellenleiter-Verbindungsstrecke (2) eingekoppelt, und über einen anderen Raumwinkelbereich (3) ein Lichtbündel von der Lichtwellenleiter-Verbindungsstrecke (2) für eine Modenselektivität ausgekoppelt wird.

3. Optoelektrische Sende- und Empfangsvorrichtung nach Anspruch 1 oder 2, dadurch gekennzeichnet, daß die Sender- und Empfänger-Raumwinkelbereiche (3, 4) koaxial zu einer auf der Abschlußfläche (1) senkrecht stehenden Achse sind.

4. Optoelektrische Sende- und Empfangsvorrichtung nach einem der vorhergehenden Ansprüche, dadurch gekennzeichnet, daß die nicht reflektierende Öffnung (14) eine Blende ist.

5. Optoelektrische Sende- und Empfangsvorrichtung nach einem der vorhergehenden Ansprüche, dadurch gekennzeichnet, daß die Normale der Prismenfläche (12), die die reflektierende Schicht (13) trägt, mit einem Winkel größer als dem Totalreflektionswinkel zu einem der einfallenden Lichtbündel (23) orientiert ist.

6. Optoelektrische Sende- und Empfangsvorrichtung nach einem der vorhergehenden Ansprüche, dadurch gekennzeichnet, daß der nicht reflektierende Bereich durch ein die Totalreflexion der reflektierenden Fläche aufhebendes optisches Element (15) gebildet ist.

7. Optoelektrische Sende- und Empfangsvorrichtung nach einem der vorhergehenden Ansprüche, dadurch gekennzeichnet, daß das optische Prisma (7) ein gleichschenkliges Prisma ist.

8. Optoelektrische Sende- und Empfangsvorrichtung nach einem der vorhergehenden Ansprüche, dadurch gekennzeichnet, daß zwischen der dem Sender (10) zugewandten Kathetenfläche (9) des optischen Prismas (7) und dem Sender (10) eine Linse (11) vorgesehen ist, die das vom Sender (10) kommende Lichtbündel in ein im wesentlichen paralleles Lichtbündel (23) umsetzt.

9. Optoelektrische Sende- und Empfangsvorrichtung nach einem der vorhergehenden Ansprüche, dadurch gekennzeichnet, daß zwischen der der Abschlußfläche (1) der Lichtwellenleiter-Verbindungsstrecke (2) zugewandten Kathetenfläche (6) des optischen Prismas (7) und der Abschlußfläche (1) der Lichtwellenleiter-Verbindungsstrecke (2) eine Linse (8) vorgesehen ist, die das reflektierte, vom Sender (10) ausgehende, im wesentlichen parallele Lichtbündel (23) auf die Abschlußfläche (1) der Lichtwellenleiter-Verbindungsstrecke (2) fokussiert und das von der Abschlußfläche (1) der Lichtwellenleiter-Verbindungsstrecke (2) ausgehende, empfangene Lichtbündel in ein im wesentlichen paralleles Lichtbündel umsetzt.

10. Optoelektrische Sende- und Empfangsvorrichtung nach Anspruch 8 und/oder 9, dadurch gekennzeichnet, daß die Linse eine Kugellinse ist.

11. Optoelektrische Sende- und Empfangsvorrichtung nach einem der vorhergehenden Ansprüche, dadurch gekennzeichnet, daß zwischen dem nicht reflektierenden Bereich bzw. der Öffnung (14) der reflektierenden Schicht (13) und dem Empfänger (16) ein Lichtwellenleiter (15) vorgesehen ist.

12. Optoelektrische Sende- und Empfangsvorrichtung nach Anspruch 11, dadurch gekennzeichnet, daß der Lichtwellenleiter (15) im wesentlichen denselben Brechungsindex wie das Prisma (7) aufweist.

13. Optoelektrische Sende- und Empfangsvorrichtung nach einem der vorhergehenden Ansprüche, dadurch gekennzeichnet, daß die optoelektrische Sende- und Empfangsvorrichtung in einem gemeinsamen Gehäuse (31) mit einer Steckerfassung (33) für den Anschluß der Lichtwellenleiter-Verbindungsstrecke (2) untergebracht ist.

14. Optoelektrische Sende- und Empfangsvorrichtung nach einem der vorhergehenden Ansprüche, dadurch gekennzeichnet, daß ein gemeinsames Gehäuse (31) das Prisma (7) umgibt und die Linsen (8, 11) hält.

## Claims

1. Optoelectrical bidirectional transmitting and receiving apparatus for a light wave guide connecting section (2) with a transmitter (10), a receiver (16) and a brancher (7) for separating the light ignals bidirectionally transmitted on the light wave guide connecting section characterized in that
- an optical prism (7) is provided as brancher between the light wave guide connecting section (2) and the transmitter or receiver respectively,
- a first and a second region are provided on a sideface of the prism (7) where in one of the regions is reflecting and the other one is light permeable, and wherein the first region (14) is surrounded by the second region (12),
- the endface of the light wave guide connecting section (2) is positioned opposite the sideface (12) of the prism (7) and the first region
- the transmitter (10) and the receiver (16) each are positioned opposite to another sideface of the prism (7) and
- the receiver (16) is located in the beampath of the transmitted or reflected signal lights respectively, so that the light from the light wave guide connecting section (2) impinges, through the prism (7), onto the sideface and the first region that reflects part of the signal light beam from the light wave guide connecting section to the receiver (16) or let's it pass respectively, so that only the central part of the signal light beam impinges onto the receiver, and
the emitted light beam from the transmitter penetrates through the prism (7) and is coupled via the one side of the prism (7) into the terminal surface of the light wave guide connecting section (2) wherein the central part of the transmitter light beam is faded out by the diaphragmatic effect of the surrounding area and thus a spatially selective coupling is achieved.

2. Optoelectrical transmitting and receiving apparatus as set forth in claim 1 characterized in that the non-reflecting region (opening 14) is arranged in such a way that over a solid angle range (4) a light beam coming from a transmitter couples into the light wave guide connecting section (2) and that a light beam is coupled out of the light wave guide connecting section over another solid angle range (3) for a mode selectivity.

3. Optoelectrical transmitting and receiving apparatus as set forth in claim 1 or 2 characterized in that the transmitter and the receiver solid angle ranges (3, 4) are located coaxially with an axis that is perpendicular to the terminal surface (1).

4. Optoelectrical transmitting and emitting apparatus as set forth in one of the preceding claims characterized in that the non reflecting opening (14) is a diaphragm.

5. Optoelectrical transmitting and receiving apparatus as set forth in one of the preceding claims characterized in that the normal to the prism surface (12) which carries the reflecting layer (13) is oriented with respect to one of the incident light beams (23) under an angle that is bigger than the angle of total reflection.

6. Optoelectrical transmitting and receiving apparatus as set forth in one of the preceding claims characterized in that the non-reflecting region is formed by an optical element (15) that eliminates the total reflection of the reflecting surface.

7. Optoelectrical transmitting and receiving apparatus as set forth in one of the preceding claims characterized in that said optical prism (7) is an isosceles prism.

8. Optoelectrical transmitting and receiving apparatus as set forth in one of the preceding claims characterized in that a lens (11) is provided between the cathetusface (9) of the optical prism (7) facing the sender (10) and the transmitter (10), wherein the lens converts a light beam coming from the transmitter (10) into an essentially parallel light beam (23).

9. Optoelectrical transmitting and receiving apparatus as set forth in one of the preceding claims characterized in that a lens (8) is provided between the terminalface (1) of the cathetusface (6) of the optical prism (7) facing the light wave guide connecting section (2) and the terminalface (1) of the light wave guide connecting section (2), wherein the lens focuses an essentially parallel light beam (23) emitted by the transmitter (10) onto the terminalface (1) of the light wave guide connecting section (2) and converts a received light beam, emitted from the terminalface (1) of the light wave guide connecting section (2) into an essentially parallel light beam.

10. Optoelectrical transmitting and receiving apparatus as set forth in claim 8 and/or 9 characterized in that the lens is a spherical lens.

11. Optoelectrical transmitting and receiving apparatus as set forth in one of the preceding claims characterized in that a light wave guide (15) is provided between the non-reflecting region or the opening (14) respectively of the reflecting layer (13) and the receiver (16).

12. Optoelectrical transmitting and receiving apparatus as set forth in claim 11 characterized in that the light wave guide (15) has essentially the same index of refraction as the prism (7).

13. Optoelectrical transmitting and receiving apparatus as set forth in one of the preceding claims characterized in that the optoelectrical transmitting and receiving apparatus is arranged in a common housing 31 (31) with a plug socket (33) for connection of the light wave guide connecting section (2).

14. Optoelectrical transmitting and receiving apparatus as set forth in one of the preceding claims characterized in that the common housing 31 (31) surrounds the prism (7) and holds the lenses (8, 11).

## Revendications

1. Dispositif d'émission et de réception opto-électrique bidirectionnel pour un parcours de liaison de guide d'ondes lumineuses (2) comportant un émetteur (10), un récepteur (16) et un dérivateur (7) destiné à séparer les signaux lumineux transmis de manière bidirectionnelle au parcours de liaison de guide d'ondes lumineuses, caractérisé en ce que
- un prisme (7) optique est prévu comme dérivateur entre le parcours de liaison de guide d'ondes lumineuses (2) et l'émetteur ou le récepteur,
- sur une face latérale du prisme (7) il est prévu une première et une seconde zones, l'une des zones étant réfléchissante et l'autre translucide et la première zone (14) étant entourée par la seconde zone (12),
- la surface d'extrémité du parcours de liaison de guide d'ondes lumineuses (2) fait face à une face latérale (12) du prisme (7) et à la première zone,
- l'émetteur (10) et le récepteur (16) font face chacun à une autre face latérale du prisme (7) et
- le récepteur (16) se trouve dans le parcours du faisceau de la lumière de signalisation qui a traversé le prisme ou qui a été réfléchi,
de sorte que la lumière provenant du parcours de liaison de guide d'ondes lumineuses (2) parvient, à travers le prisme (7), sur une face latérale et la première zone qui réfléchit ou laisse passer des parties du faisceau lumineux de signalisation provenant du parcours de liaison de guide d'ondes lumineuses vers le récepteur (16), de sorte que seule la partie centrale du faisceau lumineux de signalisation parvient sur le récepteur et
le faisceau lumineux émis par l'émetteur traverse le prisme (7) et est introduit, par un côté du prisme (7) dans la surface d'extrémité du parcours de liaison de guide d'ondes lumineuses (2), la partie centrale du faisceau lumineux de l'émetteur étant supprimée par l'effet de diaphragme de la zone environnante et une alimentation sélective dans l'espace étant ainsi obtenue.

2. Dispositif d'émission et de réception opto-électrique selon la revendication 1, caractérisé en ce que la zone non réfléchissante (ouverture 14) est disposée de telle sorte que sur une plage angulaire de l'espace (4) un faisceau lumineux provenant d'un émetteur est introduit dans le parcours de liaison de guide d'ondes lumineuses (2), et sur une autre plage angulaire de l'espace (3) un faisceau lumineux est sorti du parcours de liaison de guide d'ondes lumineuses (2) pour une sélectivité des modes.

3. Dispositif d'émission et de réception opto-électrique selon les revendications 1 ou 2, caractérisé en ce que les plages angulaires de l'espace (3, 4) de l'émetteur et du récepteur sont coaxiales à un axe perpendiculaire à la surface d'extrémité (1).

4. Dispositif d'émission et de réception opto-électrique selon l'une des revendications précédentes, caractérisé en ce que l'ouverture (14) non réfléchissante est un diaphragme.

5. Dispositif d'émission et de réception opto-électrique selon l'une des revendications précédentes, caractérisé en ce que la normale de la face (12) du prisme qui porte la couche (13) réfléchissante est orientée suivant un angle supérieur à l'angle de réflexion totale par rapport à l'un des faisceaux (23) incidents.

6. Dispositif d'émission et de réception opto-électrique selon l'une des revendications précédentes, caractérisé en ce que la zone non réfléchissante est formée par un élément optique (15) supprimant la réflexion totale de la surface réfléchissante.

7. Dispositif d'émission et de réception opto-électrique selon l'une des revendications précédentes, caractérisé en ce que le prisme optique (7) est un prisme isocèle.

8. Dispositif d'émission et de réception opto-électrique selon l'une des revendications précédentes, caractérisé en ce qu'entre la face de l'angle droit (9) tournée vers l'émetteur (10) du prisme optique (7) et l'émetteur (10), il est prévu une lentille (11) qui convertit le faisceau lumineux provenant de l'émetteur (10) en un faisceau lumineux (23) sensiblement parallèle.

9. Dispositif d'émission et de réception opto-électrique selon l'une des revendications précédentes, caractérisé en ce qu'entre la face de l'angle droit (6) du prisme optique (7), tournée vers la face d'extrémité (1) du parcours de liaison de guide d'ondes lumineuses (2) et la face d'extrémité (1) du parcours de liaison de guide d'ondes lumineuses (2), il est prévu une lentille qui focalise le faisceau lumineux (23) réfléchi, sensiblement parallèle, sortant de l'émetteur (10), sur la face terminale (1) du parcours de liaison de guide d'ondes lumineuses (2) et convertit le faisceau lumineux reçu, sortant de la face terminale (1) du parcours de liaison de guide d'ondes lumineuses (2), en un faisceau lumineux sensiblement parallèle.

10. Dispositif d'émission et de réception opto-électrique selon les revendications 8 et/ou 9, caractérisé en ce que la lentille est une lentille sphérique.

11. Dispositif d'émission et de réception opto-électrique selon l'une des revendications précédentes, caractérisé en ce qu'entre la zone non réfléchissante ou l'ouverture (14) de la couche réfléchissante (13) et le récepteur (16), il est prévu un guide d'ondes lumineuses (15).

12. Dispositif d'émission et de réception opto-électrique selon la revendication 11, caractérisé en ce que le guide d'ondes lumineuses (15) présente sensiblement le même indice de réfraction que le prisme (7).

13. Dispositif d'émission et de réception opto-électrique selon l'une des revendications précédentes, caractérisé en ce que le dispositif d'émission et de réception opto-électrique est logé dans un boîtier (31) commun avec une monture de prise (33) pour le branchement du parcours de liaison de guide d'ondes lumineuses (2).

14. Dispositif d'émission et de réception opto-électrique selon l'une des revendications précédentes, caractérisé en ce qu'un boîtier (31) commun entoure le prisme (7) et les lentilles (8, 11).
